**Europäisches Patentamt**

**European Patent Office**

**Office européen des brevets**

(19)

(11) Numéro de publication: **0 001 028
B1**

(12) # FASCICULE DE BREVET EUROPEEN

(45) Date de publication du fascicule de brevet:
**20.05.81**

(21) Numéro de dépôt: **78400078.8**

(22) Date de dépôt: **18.08.78**

(51) Int. Cl.³: **C 03 B 29/04**

---

(54) Rebrûleuse rotative pour articles en verre.

---

(30) Priorité: **26.08.77 FR 7726063**

(43) Date de publication de la demande:
**07.03.79 Bulletin 79/5**

(45) Mention de la délivrance du brevet:
**20.05.81 Bulletin 81/20**

(84) Etats contractants désignés:
**BE CH DE GB LU NL SE**

(56) Documents cités:
**US-A-1 364 939
US-A-2 338 841
US-A-2 666 277
US-A-2 883 797**

(73) Titulaire: **VERRERIES MECANIQUES CHAMPENOISES, 147, rue Ernest Renan, F-51000 Reims (FR)**

(72) Inventeur: **Morel, Jean, 14 ter, rue de Bezannes, F-51100 Reims (FR)**

(74) Mandataire: **Corre, Jacques Denis Paul et al, Cabinet Regimbeau 26, Avenue Kléber, F-75116 Paris (FR)**

BUNDESDRUCKEREI BERLIN

## Rebrûleuse rotative pour articles en verre

La présente invention concerne les machines du type appelé rebrûleuse qui sont destinées à refondre en surface des articles en verre en vue d'éliminer certaines imperfections, telles qu'arêtes vives ou irrégularités, provenant notamment du moulage desdits articles.

De façon traditionnelle, après le moulage des articles, a lieu l'opération de rebrûlage que suit un passage à un four de recuit. L'installation de rebrûlage nécessite donc, en plus de la rebrûleuse proprement dite, un poste d'alimentation et un poste d'évacuation des articles. On connaît, notamment par le brevet US 2 883 797 au nom de J. W. ELDRED une rebrûleuse comportant un ensemble rotatif faisant décrire à des plaquettes support d'article en rotation sur elles-mêmes une trajectoire circulaire. Chaque plaquette est suivie par un brûleur en surplomb permettant ainsi un rebrûlage homogène du buvant des articles à symétrie cylindrique. En outre, l'utilisation de plaquettes support ou »tournettes« plates présente l'avantage d'une alimentation et d'une évacuation aisée des articles.

Cependant, ce type de rebrûleuse présente de nombreux inconvénients. Ainsi il n'est pas possible d'arrêter le fonctionnement des brûleurs lorsqu'il n'y a pas d'articles sur les tournettes, c'est-à-dire sur la trajectoire de non rebrûlage d'articles. Par ailleurs, la rotation des plaquettes se fait à une vitesse déterminée par celle de l'ensemble rotatif ce qui interdit toute modulation du rebrûlage du buvant des articles

Par ailleurs, les articles présentant une forme dépourvue de symétrie et possédant de ce fait des zones de faiblesse qui nécessiteraient un rebrûlage précis, par exemple l'anse d'une chope de bière, ne peuvent être traités de façon adéquate.

Dans le même ordre d'idée, on assiste avec ce type de machine à un rebrûlage irrationnel des articles de forme, par exemple des beurriers. De plus, seule l'intensité de la flamme peut varier, ce qui entraîne, lorsqu'on l'accroît, une augmentation du gaspillage sur la portion de trajectoire de non rebrûlage.

La présente invention a pour objet de remédier à ces inconvénients. La rebrûleuse selon l'invention, entre autres avantages, permet en effet un rebrûlage global, à la fois du buvant et du corps de l'article ainsi qu'une utilisation optimum de l'énergie calorifique due à la combustion des brûleurs. En outre, un rebrûlage à poste fixe est tout à fait possible par l'absence de rotation des plaquettes supports.

Pour ce faire, la rebrûleuse selon l'invention est du type comportant un bâti, un ensemble rotatif vertical monté sur le bâti, des moyens d'entraînement pour assurer la rotation de l'ensemble vertical qui comprend en outre des moyens supports de tournettes rotatives destinées à se déplacer sur une trajectoire circulaire et des moyens supports de brûleurs prévus pour suivre les tournettes dans leur mouvement.

Selon une caractéristique, la rebrûleuse selon l'invention se caractérise en ce que l'alimentation des brûleurs est soumise à l'action de moyens d'ouverture et de fermeture qui sont commandés en tout ou rien par des moyens réglables de débit de combustible, l'alimentation des brûleurs étant fixée une fois pour toutes de façon optimale, alors qu'il est possible de faire varier la portion de trajectoire des plaquettes où a lieu le rebrûlage. Bien entendu, une »veilleuse« permet l'allumage du brûleur par les moyens d'ouverture lorsque chaque plaquette entre dans la zone de rebrûlage et se charge d'un article.

Selon une autre caractéristique nécessaire à l'éxécution de l'invention, chaque plaquette support peut être soumise à l'action d'au moins un brûleur couronne en surplomb et d'au moins un brûleur latéral qui sont alimentés en gaz combustible et comburant de façon réglable séparément afin de rebrûler respectivement le buvant et/ou le corps des articles. Selon un mode préférentiel de réalisation, les moyens d'ouverture et de fermeture sont constitués par des taquets fixes pouvant être basculés manuellement sur le trajet des vannes d'ouverture et de fermeture de débit afin de les solliciter. Plus précisément on réalise un premier et un second anneau de taquets surplomblant respectivement les vannes de débit des brûleurs couronne et des brûleurs latéraux.

Selon une dernière caractéristique nécessaire à l'éxécution de l'invention, les plaquettes, qui sont montées à rotation sur leurs moyens supports, sont soumises à des moyens d'entraînement réglables et débrayables permettant un rebrûlage rotatif à vitesse variable ou non rotatif, selon la forme des articles. Selon une autre variante, un brûleur par plaquette est monté réglable excentriquement par rapport à l'ensemble vertical afin de permettre un rebrûlage précis d'un point fixe des articles à rebrûler. L'alimentation et l'évacuation des articles sont enfin avantageusement assurées par l'intermédiaire de tourniquets situés de façon réglable sur la circonférence de la machine. On voit qu'il est possible d'ajuster, dans une certaine mesure, le temps de rebrûlage selon les desiderata de l'utilisateur.

La description des dessins annexés fera mieux comprendre l'invention tout en faisant apparaître d'autres caractéristiques et avantages.

La Figure 1 représente une vue partielle schématique d'une coupe verticale axiale de la machine selon l'invention.

La Figure 2 représente une vue partielle très schématique de dessus, montrant les positions respectives des moyens d'alimentation et d'évacuation par rapport aux trajets des plaquettes supports dans une machine selon l'invention.

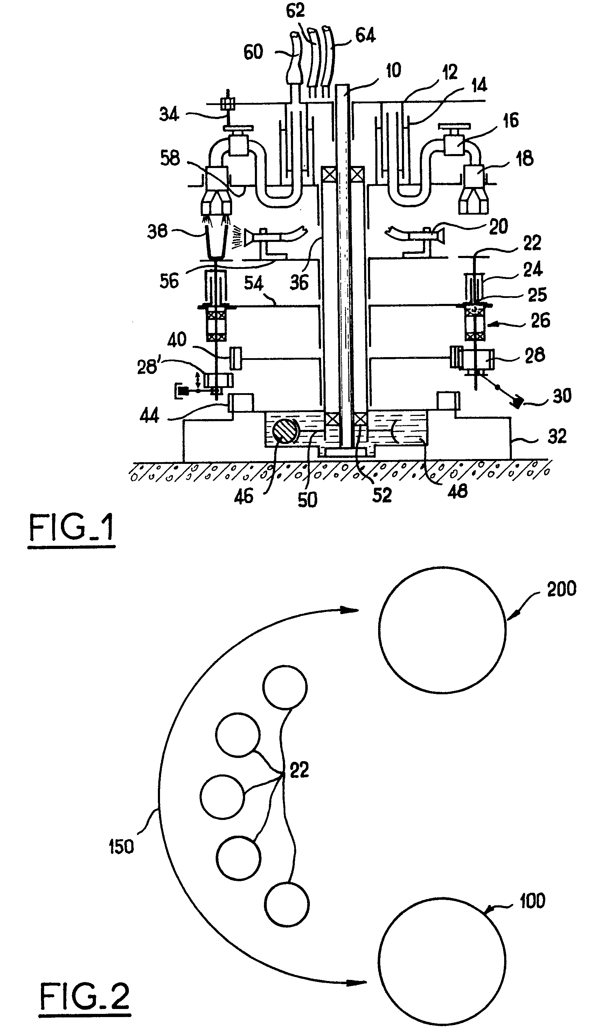

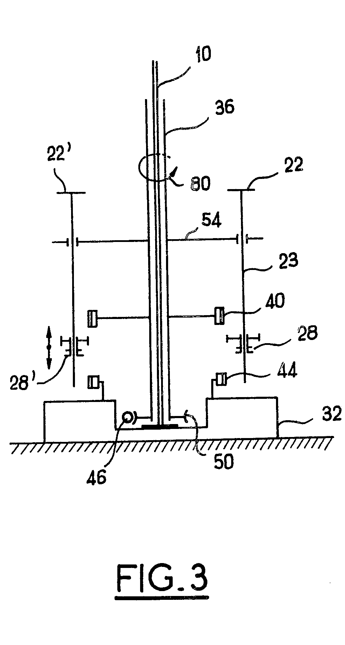

La Figure 3 représente une illustration partielle de la chaîne cinématique de la machine selon l'invention. Dans le mode de réalisation représenté à la figure 1 l'ensemble rotatif est constitué d'un arbre fixe 10 reposant sur le bâti 32 et d'une colonne centrale 36 montée à rotation, par l'intermédiaire de roulements 52, autour de l'arbre 10. Les moyens d'entraînement destinés à assurer la rotation de la colonne sont avantageusment réalisés par l'intermédiaire d'une roue d'entraînement 50, s'engrenant avec une vis sans fin tangente 46, mue par un groupe moto-variateur non représenté. La roue 50 et la vis 46 baignent dans l'huile d'un carter étanche 48. Les moyens solidaires de la colonne destinés au support des plaquettes supports 22 sont constitués par un plateau porte plaquetres supports 54. Les axes verticaux 23 des plaquettes supports 22 sont montés à rotation dans des boîtes à roulement 26 fixées à la partie inférieure du plateau 54, ceci de façon à éviter une usure prématurée des roulements par la chaleur et l'abrasion due au verre broyé. De plus, des caches protecteurs 24 protègent de façon efficace les points d'insertion 25 des axes 23 dans les boîtes 26. On voit très clairement que la rotation du plateau 54 solidaire de la colonne 36 entraîne les plaquettes supports selon une trajectoire circulaire perpendiculaire au plan de la figure 1.

Pour assurer la rotation des plaquettes supports sur elles-mêmes, sont montés des pignons coulissants 28, 28' sur les axes 23. Ces pignons 28, 28' sont actionnés sur leur axe 23 au moyen d'un système classique du type à baladeur et came fixe 30. En position haute le pignon »de droite« référencé 28 vient s'engrener sur une roue dentée 40 solidaire de la colonne cenrale et par là même tournant avec elle. Dans ce cas la plaquette supports se trouve dans l'impossibilité de tourner suivant son axe 23 puisqu'il n'y a pas de mouvement relatif entre la roue 40 et le pignon 28. En revanche, si l'on descend le pignon »de gauche« 28', celui-ci vient s'engrener sur la roue 44. Ou bien la roue 44 est fixée au bâti 32, ou bien elle est entraînée à rotation autour de son axe vertical par l'intermédiaire de moyens d'entraînement non représentés sur la figure. Dans le premier cas le mouvement de rotation de la colonne central induit un mouvement de rotation relatif entre le pignon 28' et la roue 44, on obtient alors une rotation de la plaquette support supportant l'article 38 dont la vitesse de rotation sur elle-même dépend des taux de démultiplication choisis sur les engrenages. Dans le deuxième cas la vitesse de rotation de la plaquette support se trouve directement dépendante de la vitesse variable de la roue 44. On voit donc qu'il est possible de régler la vitesse de rotation des plaquettes supports sur elles-mêmes grâce à la configuration simple de la machine selon l'invention.

Les brûleurs latéraux 20 qui suivent les plaquettes supports 22 dans leur trajectoire circulaire sont supportés par l'intermédiaire d'un plateau porte-brûleur latéral 56 solidaire de la colonne 36 avec toutefois, la possibilité d'un réglage vertical de façon à pouvoir rebrûler de manière précise et correcte les articles 38. Les brûleurs couronne 18 situés au dessus des plaquettes supports 22 sont fixés à un plateau portebrûleur couronne 58, lui aussi solidaire de la colonne 36 avec également possibilité de réglage vertical. Les brûleurs couronne 18 sont alimentés au moyen d'une arrivée de mélange comburant/gaz 60 attenante à un plateau fixe 12 solidaire de l'arbre 10. La distribution du mélange aux brûleurs couronne 18 se fait par l'intermédiaire d'un joint liquide 14 ou joint d'étanchéité classique. On a représenté en 16 des robinets de contrôle de vanne du débit d'alimentation en mélange aux brûleurs couronne. On dispose avantageusement des taquets 34 fixés au plateau 12 dont le rôle est d'assurer la fermeture et l'ouverture des robinets 16 lorsque ceux-ci passent à l'aplomb vertical des taquets au cours de leur trajectoire circulaire. Un système d'alimentation tout à fait analogue, avec chambre étanche ou joint liquide situés dans la colonne centrale, est utilisé pour assurer l'alimentation des brûleurs latéraux 20 par une arrivée de gaz 62 et une arrivée d'oxygène 64 ou autre comburant qui seules ont été représentées sur la Figure 1. On voit que, grâce aux taquets, il est tout à fait possible d'être maître de la combustion individuelle des brûleurs latéraux et des brûleurs couronne de façon à ne les faire fonctionner que sur le trajet où les plaquettes supports 22 supportent un article 38. On se référera pour cela à la partie gauche de la Figure 1.

La Figure 2, très schématiquement et partielle, montre une disposition possible d'un tourniquet d'alimentation 100 et d'un tourniquet d'évacuation 200. La flèche 150 indique la zone de rebrûlage des plaquettes supports 22. Il est possible de régler la position des tourniquets 100 et 200 et l'on constate aisément que le fonctionnement des brûleurs doit de faire sur le parcours indiqué par la flèche 150. Les tourniquets 100 et 200 sont d'un type connu et la demanderesse fabrique un système de ce type particulièrement simple et efficace (Brevet français 2 335 458).

La Figure 3 reprend une illustration partielle de la chaîne cinématique de la machine selon l'invention. On voit qu'en positionnant le pignon coulissant »de droite« 28 en regard de la roue 40, solidaire de la colonne 36, la plaquette support »de droite« 22 se trouve dans l'impossibilité de tourner autor de son axe 23 au cours de la rotation indiquée par la flèche 80. A l'opposé, en positionnant le pignon »de gauche« 28' pour qu'il s'engrène sur la roue fixe 44, il est clair que la plaquette support 22' va entrer en rotation sur elle-même au cours de la trajectoire circulaire provoquée par la rotation de colonne 36 selon la flèche 80. Comme on l'a dit au cours de la description de la Figure 1 ci-dessus, un montage comportant une possibilité de rotation de la roue 44 permet d'induire une rotation des plaquettes supports 22' selon une vitesse variable indépendante de la vitesse de rotation selon la flèche 80.

Le mode de réalisation décrit ci-dessus semble compliqué puisqu'il comporte autant d'ensembles de rebrûlage qu'il y a de plaquettes supports. Cela peut paraître un inconvénient du point de vue réglage mais il faut savoir que les plateaux porte brûleurs sont des éléments rigides tournant toujours avec le plateau porte plaquettes supports 54 et que par conséquent les brûleurs restent constamment parfaitement centrés par rapport aux plaquettes supports. Le réglage en hauteur des plateaux porte brûleurs permet en outre de parfaire le réglage vertical de tous les brûleurs en une seule fois. Comme on l'a vu plus haut il suffit de faire engrener le pignon coulissant 28 avec la roue 40 pour que la plaquette support ne tourne pas sur elle-même.

On peut alors rebrûler un point particulier de l'article, par exemple l'anse d'une chope. Pour que la plaquette support tourne sur elle-même il suffit de faire engrener le pignon coulissant 28 sur la roue 44. Il est alors possible de rebrûler le bord de l'article avec un brûleur couronne ou un brûleur latéral, ou bien d'avoir un rebrûlage général dans le corps de l'article. En principe, avec un brûleur couronne, il ne serait pas obligatoire de faire tourner l'article, mais en pratique, on ne peut assurer que l'intensité de la flamme sera identique sur toute la périphérie du brûleur, il est donc préférable de faire tourner l'article pour obtenir un rebrûlage uniforme. Une came fixe 30 permet selon sa position de déclencher le début ou la fin de la rotation des plaquettes supports sur elles-mêmes au cours d'un cycle. Comme la mise en service des brûleurs se fait à volonté par le positionnement des taquets, on est absolument libre quant au choix du mode de rebrûlage ou du temps de chaque rebrûlage.

Dans le cas d'un chargement en deux points, comme cela se fait sur une machine fabriquée par la demanderesse, il suffit d'avoir un double jeu de taquets (sur des diamètres différents) décalés angulairement d'un angle égal à l'espacement des deux chargements.

La rebrûleuse selon l'invention comporte donc comme on vient de le voir, une mécanique très simple, donc peu couteuse d'entretien : en effet la machine se résume grossièrement à une colonne centrale tournante supportant plusieurs plateaux dont l'un supporte des plaquettes supports commandées par un pignon coulissant venant s'engrener soit sur une roue fixe, soit sur une roue fixée sur la colonne centrale. Cette configuration permet d'éliminer un grand nombre des inconvénients des rebrûleuses de type connu. En particulier, il est possible de rebrûler à poste fixe en contrôlant de façon très précise le temps de rebrûlage qui, de plus, est uniforme. Par ailleurs le gaspillage d'énergie calorifique se trouve minimisé tandis qu'il est possible de rebrûler »le buvant« des articles de forme simple. Il va sans dire que la description du mode de réalisation préférentiel de l'invention qui vient d'être faite ci-dessus n'est en aucun cas limitative et que l'invention s'étend à toutes les variantes conformes à son esprit.

## Revendications

1. Une rebrûleuse du type comportant un bâti (32), un ensemble rotatif vertical (36) monté sur le bâti, des moyens d'entraînement (46, 50) pour assurer la rotation de l'ensemble vertical qui comprend en outre des moyens supports (54) de plaquettes supports d'articles (22, 22') destinées à se déplacer sur une trajectoire circulaire et des moyens supports (56, 58) de brûleurs (20, 18) prévus pour suivre les plaquettes (22, 22') dans leur mouvement, caractérisée par le fait que l'alimentation des brûleurs est soumise à l'action de moyens d'ouverture et de fermeture (16) commandés en tout ou rien par des moyens réglables (34) de débit de combustible, par le fait que chaque plaquette support d'article (22, 22') peut être soumise à l'action d'au moins un brûleur couronne en surplomb (18) et d'au moins un brûleur latéral (20) et par le fait que les plaquettes (22, 22') qui sont montées à rotation sur leurs moyens supports (54), sont soumises à des moyens d'entraînement réglables et débrayables (28, 28', 40, 44, 30) permettant de régler la vitesse de rotation selon une gamme de vitesses comprenent la vitesse nulle.

2. Une rebrûleuse selon la revendication 1, caractérisée par le fait qu'un brûleur (20) par plaquette (22) est monté réglable excentriquement par rapport à l'ensemble vertical afin de permettre un rebrûlage précis d'un point fixe de l'article à rebrûler.

3. Une rebrûleuse selon l'une des revendications 1 et 2, caractérisée en ce que l'ensemble rotatif vertical est constitué d'un arbre central vertical (10) fixé au bâti (32) et d'une colonne centrale (36) montée à rotation sur l'arbre.

4. Une rebrûleuse selon la revendication 3, caractérisée en ce que les moyens d'entraînement pour assurer la rotation de la colonne comportent un groupe motovariateur entraînant une vis sans fin (46) s'engrenant tangentiellement à une roue horizontale (50) solidaire de la colonne centrale (36).

5. Une rebrûleuse selon la revendication 4, caractérisée en ce que les moyens (54) solidaires de la colonne (36) et destinés au support des plaquettes supports (22) sont constitués par un plateau horizontal (54) à la surface inférieure duquel sont fixées des boîtes à roulement (26) dans lesquelles passent les axes verticaux (23) des plaquettes supports, et à la surface supérieure duquel se trouvent des caches protecteurs (24) qui protègent les axes des plaquettes supports et les roulements des effets calorifiques du rebrûlage et de l'abrasion du verre broyé.

6. Une rebrûleuse selon l'une des revendications 3 à 5, caractérisée en ce que les moyens d'entraînement pour assurer la rotation des plaquettes supports sur elles-mêmes comportent au moins un pignon (28, 28') coulissant verticalement sur les axes (23) des plaquettes supports (22) entre une position où ledit pignon s'engrène sur une roue (40) solidaire de la colonne centrale, cette position ayant pour effet d'empêcher la rotation des plaquettes supports sur elles-mêmes, et une autre position où ledit pignon s'engrène sur une roue (44) qui est, soit fixée au bâti (32) de la machine et par conséquent immobile, soit entraînée à vitesse variable, et dans cette position les plaquettes supports tournent sur elles-mêmes, la sélection entre ces deux positions du pignon coulissant se faisant au moyen d'un système à came fixe (30).

7. Une rebrûleuse selon l'une des revendications 3 à 6, caractérisée en ce que les moyens (56) solidaires de la colonne (36) destinée au support de brûleurs latéraux (20) sont constitués d'un plateau horizontal (56) dont la position en hauteur sur la colonne peut être réglée selon les articles à rebrûler.

8. Une rebrûleuse selon l'une des revendications 3 à 7, caractérisée en ce que les moyens (58) solidaires de la colonne (36) destinés au support des brûleurs couronne (18) sont constitués d'un plateau horizontal (58) dont la position en hauteur sur la colonne peut être réglée selon les articles à rebrûler.

9. Une rebrûleuse selon l'une des revendications 3 à 8, caractérisée en ce que les moyens d'alimentation en combustible des brûleurs latéraux (20) sont réalisés au moyen d'une chambre d'étanchéité incorporée à la colonne centrale.

10. Une rebrûleuse selon l'une des revendications 3 à 9, caractérisée en ce que les moyens d'alimentation en combustible des brûleurs couronne (18) sont réalisés au moyen d'un joint liquide (14) ou d'une chambre d'étanchéite fixés sur le plateau support (58) des brûleurs couronne (18).

11. Une rebrûleuse selon l'une des revendications 3 à 10, caractérisée en ce que les moyens de commando des moyens d'ouverture et de fermeture de l'alimentation des brûleurs couronne et des brûleurs latéraux sont constitués par des taquets (34) attenant à un plateau (12) fixé à l'arbre central (10), lesdits taquets ouvrant et fermant alternativement les moyens d'ouverture ou de fermeture (16) de l'alimentation des brûleurs au passage desdits moyens à l'aplomb vertical desdits taquets.

**Patentansprüche**

1. Verschmelzmaschine mit einem Grundgestell (32), einem auf dem Grundgestell angebrachten vertikalen Drehaufbaus (36), einer Antriebseinrichtung (46, 50) zur Drehung des vertikalen Aufbaus, welcher außerdem eine Trägereinrichtung (54) für längs einer Kreisbahn zu bewegende Trägerplättchen (22, 22') für Gegenstände und eine Trägereinrichtung (56, 58) für Brenner (20, 18), welche den Plättchen (22, 22') in ihrer Bewegung folgend vorgesehen sind, aufweist, dadurch gekennzeichnet, daß die Speisung der Brenner der Wirkung einer Öffnungs- und Schließeinrichtung (16) unterworfen ist, welche in Auf-Zu-Weise durch eine einstellbare Einrichtung (34) für den Brennstofffluß gesteuert wird, daß jedes Trägerplättchen (22, 22') für die Gegenstände der Wirkung wenigstens eines überhängenden Ringbrenners (18) und wenigstens eines seitlichen Brenners (20) unterworfen werden kann, und daß die Plättchen (22, 22'), die drehbar auf ihrer Trägereinrichtung (54) angebracht sind, einer verstellbaren und auskuppelbaren Antriebseinrichtung (28, 28', 40, 44, 30) unterworfen sind, welche eine Einstellung der Drehgeschwindigkeit in einem die Geschwindigkeit null enthaltenden Geschwindigkeitsbereich gestattet.

2. Verschmelzmaschine nach Anspruch 1, dadurch gekennzeichnet, daß zur genauen Verschmelzung einer bestimmten Stelle des zu verschmelzenden Gegenstands je Plättchen (22) ein Brenner (20) exzentrisch bezüglich des Vertikalaufbaus verstellbar angebracht ist.

3. Verschmelzmaschine nach einem der Ansprüche 1 und 2, dadurch gekennzeichnet, daß der vertikale Drehaufbau durch eine am Grundgestell (32) befestigte vertikale Mittelwelle (10) und eine auf der Welle drehbare Mittelsäule (36) gebildet ist.

4. Verschmelzmaschine nach Anspruch 3, dadurch gekennzeichnet, daß die Antriebseinrichtung für die Drehung der Säule einen Motor mit stufenlosem Getriebe umfaßt, durch welche eine Schnecke (46) angetrieben wird, welche tangential in ein mit der zentralen Säule (36) fest verbundenes horizontales Rad (50) eingreift.

5. Verschmelzmaschine nach Anspruch 4, dadurch gekennzeichnet, daß die mit der Säule (36) fest verbundene Einrichtung (54) zur Halterung der Trägerplättchen (22) durch eine horizontale Scheibe (54) gebildet ist, an deren Unterseite Wälzlagergehäuse (26) angebracht sind, durch welche die vertikalen Wellen (23) der Trägerplättchen verlaufen, und an deren Oberseite sich Schutzabdeckungen (24) befinden, die die Wellen der Trägerplättchen und die Wälzlager vor der Wärmeeinwirkung beim Verschmelzen und dem Abtrag des verschmolzenen Glases schützen.

6. Verschmelzmaschine nach einem der Ansprüche 3 bis 5, dadurch gekennzeichnet, daß die Antriebseinrichtung für die Drehung der Trägerplättchen um die eigene Achse wenigstens ein Ritzel (28, 28') aufweist, welches vertikal auf den Wellen (23) der Trägerplättchen (22) zwischen einer Stellung, in der das Ritzel in ein mit der Mittelsäule fest verbundenes Rad (40) eingreift, wobei diese Stellung bewirkt, daß eine Drehung der Trägerplättchen um die eigene Achse verhindert ist, und einer weiteren Stellung, in der das Ritzel in ein Rad (44) eingreift, welches entweder am Grundgestell (32) der Maschine befestigt und damit unbeweglich ist oder mit veränderbarer Geschwindigkeit angetrieben wird, wobei in dieser Stellung die Trägerplättchen sich um die eigene Achse drehen, gleitet, wobei die Auswahl zwischen den beiden Stellungen des gleitenden Ritzels mittels einer Einrichtung mit festehendem Mitnehmer (30) geschieht.

7. Verschmelzmaschine nach einem der Ansprüche 3 bis 6, dadurch gekennzeichnet, daß die mit der Säule (36) fest verbundene Trägereinrichtung (56) für die seitlichen Brenner (20) durch eine horizontale Scheibe (56) gebildet ist, deren Höhenlage auf der Säule entsprechend den zu verschmelzenden Gegenständen eingestellt werden kann.

8. Verschmelzmaschine nach einem der Ansprüche 3 bis 7, dadurch gekennzeichnet, daß die mit der Säule (36) fest verbundene Trägereinrichtung (58) für die Ringbrenner (18) durch eine horizontale Platte (58) gebildet ist, deren Höhenlage auf der Säule entsprechend den zu verschmelzenden Gegenständen eingestellt werden kann.

9. Verschmelzmaschine nach einem der Ansprüche 3 bis 8, dadurch gekennzeichnet, daß die Einrichtung zur Brennstoffzufuhr für die seitlichen Brenner (20) mittels einer in die Mittelsäule aufgenommenen Dichtungskammer ausgeführt ist.

10. Verschmelzmaschine nach einem der Ansprüche 3 bis 9, dadurch gekennzeichnet, daß die Einrichtung zur Brennstoffzufuhr für die Ringbrenner (8) mittels einer auf der Trägerplatte (58) für die Ringbrenner (18) befestigten Flüssigkeitsdichtung (14) oder Dichtungskammer ausgeführt ist.

11. Verschmelzmaschine nach einem der Ansprüche 3 bis 10, dadurch gekennzeichnet, daß die Steuereinrichtung für die Einrichtung zum Öffnen und Schließen der Zufuhr zu den Ringbrennern und den seitlichen Brennern durch Anschläge (34) gebildet ist, welche an einer an der Mittelwelle (10) befestigte Scheibe (12) liegen, wobei die Anschläge die Einrichtung zum Öffnen und Schließen (16) der Zufuhr zu den Brennern beim Durchgang der Einrichtung senkrecht durch die Anschläge abwechselnd öffnen und schließen.

## Claims

1. A fire-finishing machine of the type comprising a frame (32), a vertical rotary assembly (36) mounted on the frame, drive means (46, 50) for ensuring the rotation of the vertical assembly which further comprises means (54) for supporting article supporting cups (22, 22′) intended to move over a circular path and means (56, 58) for supporting burners (20, 18) provided to follow the cups (22, 22′) in their movement, characterised in that the supply of the burners is subjected to the action of opening and closing means (16) controlled by on-off action by adjustable means (34) for fuel flow, in that each article supporting cup (22, 22′) may be subjected to the action of at least one overhanging ring burner (18) and at least one lateral burner (20) and in that the cups (22, 22′) which are mounted to rotate on their support means (54) are subjected to adjustable and disconnectable drive means (28, 28′, 40, 44, 30) allowing the speed of rotation to be adjusted in a range of speeds including zero speed.

2. A fire-finishing machine according to Claim 1, characterised in that one burner (20) per cup (22) is mounted to be eccentrically adjustable with respect to the vertical assembly in order to allow a precise fire-finishing of a fixed point of the article to be fire-finished.

3. A fire-finishing machine according to one of Claims 1 and 2, characterised in that the vertical rotary assembly is constituted by a central vertical shaft (10) fixed to the frame (32) and a central column (36) mounted to rotate on the shaft.

4. A fire-finishing machine according to Claim 3, characterised in that the drive means ensuring rotation of the column comprise a variable speed motor unit driving an endless screw (46) meshing tangentially with a horizontal wheel (50) fast with the central column (36).

5. A fire-finishing machine according to Claim 4, characterised in that the means (54) fast with the column (36) and intended for supporting the support cups (22) are constituted by a horizontal plate (54) on the lower surface of which are fixed roller bearing cases (26) in which pass the vertical shafts (23) of the support cups, and on the upper surface of which are located protecting covers (24) which protect the shafts of the support cups and the rollers from the calorific effects of fire-finishing and from the abrasion of the crushed glass.

6. A fire-finishing machine according to one of Claims 3 to 5, characterised in that the drive means for ensuring the rotation of the support cups on themselves comprise at least one pinion (28, 28′) sliding vertically on the shafts (23) of the support cups (22) between a position where said pinion meshes on a wheel (40) fast with the central column, this position having for its effect to prevent the rotation of the support cups on themselves and another position where said pinion meshes on a wheel (44) which is either fixed to the frame (32) of the machine and consequently immobile, or driven at variable speed and in this position the support cups rotate on themselves, the selection between these two positions of the sliding pinion being made by means of a conventional system with fixed cam (30).

7. A fire-finishing machine according to one of Claims 3 to 6, characterised in that the means (56) fast with the column (36) intended for supporting lateral burners (20) are constituted by a horizontal plate (56) whose position in height on the column may be adjusted according to the articles to be fire-finished.

8. A fire-finishing machine according to one of Claims 3 to 7, characterised in that the means (58) fast with the column (36) intended for supporting the ring burners (18) are constituted by a horizontal plate (58) whose position in height on the column may be adjusted according to the articles to be fire-finished.

9. A fire-finishing machine according to one of Claims 3 to 8, characterised in that the means supplying the lateral burners (20) with fuel are effected by means of a tight chamber incorporated in the central column.

10. A fire-finishing machine according to one of Claims 3 to 9, characterised in that the means supplying the ring burners (18) with fuel are effected by means of a liquid seal (14) or a tight chamber fixed to the plate (58) holding the ring burners (18).

11. A fire-finishing machine according to one of Claims 3 to 10, characterised in that the means for controlling the means for opening and closing the supply of the ring burners and the lateral burners are constituted by fingers (34) attached to a plate (12) fixed to the central shaft (10), said fingers alternately opening and closing the means (16) for opening or closing the supply of the burners on passage of said means vertically plumb with respect to said fingers.

FIG_1

FIG.2

FIG.3